Europäisches Patentamt

European Patent Office

Office européen des brevets

Veröffentlichungsnummer: **0 296 375**
**A2**

# EUROPÄISCHE PATENTANMELDUNG

Anmeldenummer: 88108486.7

Int. Cl.⁴ **G01L 13/06**

Anmeldetag: 27.05.88

Priorität: 12.06.87 DE 3719620

Veröffentlichungstag der Anmeldung:
28.12.88 Patentblatt 88/52

Benannte Vertragsstaaten:
DE FR GB

Anmelder: **HOTTINGER BALDWIN MESSTECHNIK GMBH**
**Im Tiefen See 45 Postfach 42 35**
**D-6100 Darmstadt(DE)**

Erfinder: **Matthess, Karl Heinz**
**Gruberstrasse 42**
**D-6100 Darmstadt(DE)**
Erfinder: **Gerhardt, Klaus**
**Falltorstrasse 26**
**D-6108 Weiterstadt 2(DE)**

Vertreter: **Brand, Fritz, Dipl.-Ing.**
**Hottinger Baldwin Messtechnik GmbH**
**Patentabteilung Im Tiefen See 45 Postfach 42 35**
**D-6100 Darmstadt(DE)**

Mechanisch-elektrischer Differenzdruckwandler und Verfahren zur Justierung eines derartigen Wandlers.

Bei einem Differenzdruck-Wandler (1) mit durch eine bewegbare Wand (4) abgeschlossenen Kammern (5,6) und mit einer induktiven Einrichtung (11,12,13,14,21), die einen mit der Wand (4) bewegbaren Kern (21) und eine in ihrer Lage zum Kern (21) einstellbare Spulenanordnung (13,14) umfaßt, ist zwecks Vereinfachung des konstruktiven Aufbaus, kostengünstiger Herstellbarkeit und hoher Genauigkeit und Reproduzierbarkeit der Meßwerte sowie einfacher und genauer Justiermöglichkeit vorgesehen, daß Kern (21) und Spulenanordnung (13,14) eine Differentialdrossel mit zumindest zwei gegeneinander verstellbaren Spulen (13,14) bilden und daß die Lage jeder Spule (13,14) zum Kern (21) einstellbar ist.

Fig. 1

## Mechanisch-elektrischer Differenzdruckwandler und Verfahren zur Justierung eines derartigen Wandlers

Die Erfindung bezieht sich auf einen mechanisch-elektrischen Wandler zur Messung eines Differenzdrucks mit durch eine bewegbare Wand abgeschlossenen Kammern und mit einer induktiven Einrichtung, die einen mit der Wand bewegbaren Kern und eine in ihrer Lage gegenüber dem Kern einstellbare Spulenanordnung umfaßt, sowie auf ein Verfahren zur Justierung eines mechanisch-elektrischen Differenzdruckwandlers.

Differenzdruckwandler, die auf induktiver Basis arbeiten, werden vorzugsweise zum genauen Messen von Unterdrücken, Drücken oder Druckdifferenzen von Gasen oder Flüssigkeiten eingesetzt.

Ein mechanisch-elektrischer Wandler der eingangs genannten Art ist aus der DE-AS 12 75 307 bekannt. Dieser Differenzdruckwandler besitzt eine von einer beweglichen Wand abgeschlossene Kammer, die eine an der beweglichen Wand befestigte Stange mit einem Kern aufnimmt, der von einem Spulenträger umgeben ist. Zur Bildung eines Differentialtransformators sind eine an eine Spannungsquelle angeschlossene Primärspule und zwei in Reihe geschaltete Sekundärspulen zur Erzeugung der Ausgangssignale vorgesehen, wobei der Spulenträger mit dieser Spulenanordnung relativ zum Kern axial einstellbar ist. Wenn die Stellung des Spulenträgers verändert wird, ändert sich die Einstellung des Transformators mit Bezug auf den Kern. Der Differentialtransformator weist eine elektrische Mittellinie auf, die die Mitte der elektrischen Symmetrie der Sekundärspulen darstellt. In den Sekundärspulen werden entgegengesetzte Ausgangsspannungen erzeugt. Vor einer Druckbeaufschlagung des Wandlers kann der Spulenträger so verstellt werden, daß die Sekundärspannungen gleich groß sind und sich aufheben. Hierdurch wird ein bei gleichen Drücken auftretendes Nullsignal des Transformators eingestellt. Ein derartiger Differenzdruckwandler ist aufwendig aufgebaut und erfordert eine hohe Präzision bei der Herstellung, insbesondere bei der Herstellung der beweglichen Wand.

Der Erfindung liegt die Aufgabe zugrunde, einen Differenzdruckwandler zu schaffen, welcher bei einfachem konstruktiven Aufbau und kostengünstiger Herstellbarkeit eine hohe Genauigkeit und Reproduzierbarkeit der Druckmeßwerte aufweist und der einfach und genau justiert werden kann.

Erfindungsgemäß wird diese Aufgabe dadurch gelöst, daß Kern und Spulenanordnung eine Differentialdrossel mit zumindest zwei gegeneinander verstellbaren Spulen bilden und daß die Lage jeder Spule zum Kern einstellbar ist. Durch Einstellen des Abstandes der beiden Spulen zueinander wird eine Justierung des Kennwertes des Wandlers ermöglicht, und zwar wird bei Vergrößern des Abstandes eine Verkleinerung des Kennwertes bzw. bei Verkleinerung des Abstandes eine Vergrößerung des Kennwertes erreicht. Der Kennwert, beispielsweise angegeben in mV/V, ist das tatsächliche Ausgangssignal am Meßbereichsendwert der Differenzdruckmessung. Da bewegliche Wände bei Druckbeaufschlagung einen großen Streubereich des Kennwertes, d. h. eine schlechte Reproduzierbarkeit der Auslenkung verursachen können, erweist es sich insbesondere im Hinblick auf die Fertigungsgenauigkeit als besonders vorteilhaft, daß durch Verstellen der Spulen der Kennwert in bestimmten Grenzen beliebig eingestellt werden kann. Darüber hinaus kann durch unterschiedliches Verstellen der beiden Spulen das Auftreten eines Symmetriefehlers bei der Differenzdruckmessung unterbunden werden.

Das erfindungsgemäße Verfahren zur Justierung sieht vor, die Einstellung des Wandlerausgangssignals auf Null durch Verstellen der Position zumindest einer Spule vorzunehmen und zum Einstellen eines vorgegebenen Kennwertes einander zugeordnete, voneinander unabhängig verstellbare Spulen um gleiche Wege in entgegengesetzte Richtungen zu verstellen. Zweckmäßig wird dazu zumindest eine von zwei Spulen orthogonal zur Membranoberfläche verstellt und anschließend werden zur Einstellung des Kennwertes beide Spulen orthogonal zur Membranoberfläche um gleiche Wege in entgegengesetzten Richtungen verstellt.

Eine Weiterbildung des erfindungsgemäßen Wandlers mit besonders einfachem und funktionssicherem Aufbau sieht vor, daß die bewegbare Wand als zwischen zwei Kammern angeordnete, beidseitig ferromagnetische, den Kern der induktiven Einrichtung bildende Bereiche aufweisende Membran ausgebildet ist, und daß mit Abstand zu den ferromagnetischen Bereichen zu beiden Seiten der Membran jeweils eine Spule angeordnet ist.

Besonders fertigungsgerecht ist eine Ausführung, bei der die Kammern von im wesentlichen zylindrischen Ausnehmungen in jeweils einer Gehäusehälfte des Wandlers gebildet werden, bei der die Membran zwischen den Gehäusehälften eingespannt ist, und bei der die Spulen in der Längsachse des Wandlers nahe den gehäuseseitigen Stirnflächen der Kammern angeordnet sind.

Bei der Differenzdruckmessung aggressiver Medien ist es vorteilhaft, die Spulen verstellbar jeweils am Ende einer durch eine Trennwand von der Kammer druckmitteldicht getrennten Axialbohrung anzuordnen. Auf einen ge sonderten Schutz der Spulen durch zum Beispiel einen Überzug mit einem gegen das zu messende Medium resistenten Material kann dabei verzichtet werden.

Zweckmäßig ist eine Ausführungsform, bei der als Stelleinrichtungen zur Verstellung der Spule eine von außerhalb des Gehäuses zugängliche Gewindeeinrichtung vorgesehen ist, da eine Justierung bzw. eine Überprüfung der Justierung und gegebenenfalls eine Neueinstellung bei komplett montiertem Wandler durchgeführt werden kann. Dabei kann vorgesehen werden, daß die Gewindeeinrichtung eine einerseits von der äußeren Gehäusestirnfläche und andererseits von der Trennwand begrenzte Gewindebohrung aufweist.

Eine Ausführungsform der Erfindung ist in der Zeichnung dargestellt und wird im folgenden ebenso wie das erfindungsgemäße Verfahren näher erläutert.

Es zeigen:
        Figur 1 einen Längsschnitt des Wandlers,
        Figur 2 eine schematische Schaltungsdarstellung der Meßanordnung.

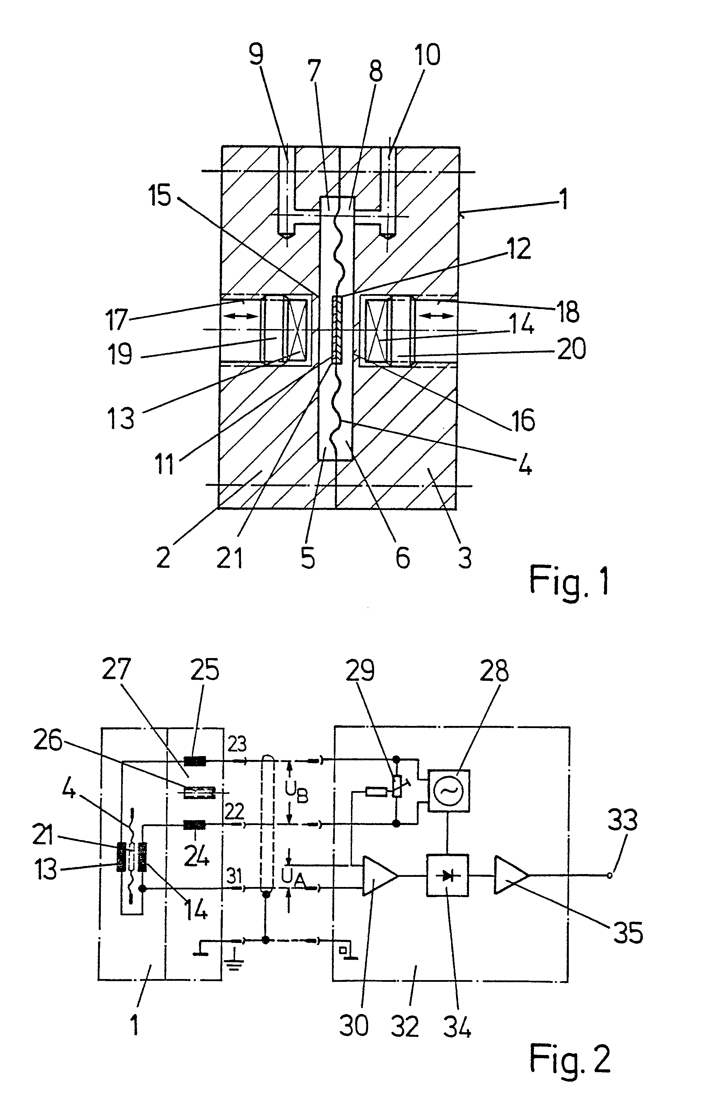

Der in der Figur 1 dargestellte Wandler 1 umfaßt zwei Flansche 2,3, die mittels einer nicht näher dargestellten Verschraubung miteinander druckmitteldicht verbunden sind. Zwischen den Flanschen ist druckmitteldicht eine Membran 4 eingespannt, die jeweils eine druckbeaufschlagbare Kammer 5,6 abschließt. Die druckbeaufschlagbaren Kammern 5,6 sind durch von den Anlageflächen der Flansche 2,3 ausgehende Ausnehmungen 7,8 gebildet. Die Ausnehmungen 7,8 haben zylindrische Form und sind durch seitliche Bohrungen 9,10 mit Druckmittel versorgbar.

Die Membran trägt beiderseits mittig angeordnete Scheiben 11,12 aus ferromagnetischem Material. Den Scheiben 11,12 sind, in Achsrichtung benachbart, Spulen 13,14 zugeordnet, die durch eine zwischen der jeweiligen Kammer 5 bzw. 6 und der jeweiligen Spule 13 bzw. l4 angeordnete dünne Wand 15 bzw. 16 des Flansches 2 bzw. 3 vom Druckmittel getrennt sind.

Die Wand 15,16 ist am geschlossenen Ende einer in Achsrichtung des Wandlers verlaufenden Gewinde-Sacklochbohrung 17,18 angeordnet, in die Gewindestücke 19,20 einschraubbar sind. Die Spulen 13,14 sind jeweils auf der Wand 15,16 zugewandten Stirnseite der Gewindestücke 19,20 angeordnet. Durch Drehen der Gewindestücke 19,20 sind die Spulen 13,14 in ihrer axialen Lage bezüglich der Membran einstellbar, wie durch den Doppelpfeil in Figur 1 angedeutet.

Zur Auswertung der Meßsignale ist die Schaltung nach Figur 2 vorgesehen. Die Spulen 13,14 sind in Reihe geschaltet und bilden mit dem auf der Membranmitte angeordneten Kern, der aus der Scheibe 11 und der Scheibe 12 besteht, eine induktive Halbbrücke bzw. eine Differentialdrossel, die über die Anschlüsse 22 und 23 mit der Speisespannung $U_B$ versorgt wird. Zur Korrektur der Wandlerempfindlichkeit kann ein Empfindlichkeitstrimmer vorgesehen werden. In dem Ausführungsbeispiel ist gemäß Fig. 2 ein Empfindlichkeitstrimmer 27 vorgesehen. Dazu liegen in den Leitungen zu den beiden Spulen 13,14 die Spulenwicklungen 24 und 25 des mit einem Trimmkern 26 versehenen Empfindlichkeitstrimmers 27. Am Ausgang 31 ist die Ausgangsspannung $U_A$ abnehmbar.

Im Meßverstärker 32 werden die als Halbbrücken geschalteten Spulen durch ein Widerstandspaar zu einer Wheatstone-Brücke ergänzt. Der Meßverstärker weist einen Spannungsgenerator 28 zur Erzeugung der Eingangs spannung $U_A$, ein Widerstandsnetzwerk 29, einen Vorverstärker 30, einen Gleichrichter 34 sowie einen Endverstärker 35 auf.

Das Widerstandsnetzwerk 29 umfaßt das Widerstandspaar sowie einen zwischen dem Widerstandspaar angeschlossenen Widerstand, der mit einem Eingang des Vorverstärkers 30 verbunden ist, dessen anderem Eingang die Ausgangsspannung $U_A$ zugeführt wird. Der Gleichrichter ist eingangsseitig mit dem Vorverstärker verbunden, weist einen weiteren Eingang zur Verbindung mit dem Spannungsgenerator 28 sowie einen Ausgang zur Verbindung mit dem Endverstärker 35 auf. Am Ausgang des Endverstärkers steht das Ausgangssignal des Meßverstärkers 32 an.

Nach der Montage des Wandlers wird dieser bezüglich Symmetrie und Kennwert justiert. Dazu werden die beiden Kammern 5 und 6 gleichem Druck ausgesetzt, so daß die Membran eine dem Differenzdruck Null zugeordnete Neutralstellung einnimmt. Durch Verdrehen zumindest eines der die Spulen 13,14 tragenden Gewindestücke 19,20 wird ein eventuell vorhandener Symmetriefehler auf einen zulässigen Minimalwert gebracht. Anschließend kann durch Verdrehen jedes Gewindestücks 19,20 derjenige Abstand der Spulen 13,14 zur Membran 4, der bei der Symmetriefehlerminimierung eingestellt wurde, verändert werden. Die beiden Spulen 13,14 werden dabei um gleiche Wege, aber in entgegengesetzte Richtungen verschoben. Dadurch vergrößert oder verkleinert sich der gegenseitige Abstand der Gewindestücke. Eine Vergrößerung des gegenseitigen Abstands führt zu einer Verkleinerung des Kennwertes, d. h. des Ausgangssignals beim Meßbereichsendwert; der Kennwert wird üblicherweise in mV/V angegeben. Eine Verkleinerung des gegenseitigen Abstands bewirkt eine Vergrößerung des Kennwertes. Nach Einstellung des gewünschten Kennwertes ist der Wandler betriebsbereit.

Vor der Messung wird die Brückenschaltung mit Hilfe des Meßverstärkers 32 auf Null abgeglichen. Falls Druckmittel mit verschiedenen Drücken beiden Kammern 5,6 zugeführt werden, wird die Membran 4 nach einer Seite ausgelenkt, die Meßbrücke verstimmt und eine Ausgangsspannung $U_A$ hervorgerufen. Die Ausgangsspannung des Wandlers 1 ist proportional zur Membranauslenkung und somit ein Maß für den Differenzdruck. Das Verhältnis $U_A \cdot U_B$ ist als Ausgangssignal definiert. Nach der Verstärkung im Meßverstärker 32 liegt am Ausgang 33 des Meßverstärkers 32 eine vorzeichen- und amplitudengerechte Aussage über den gemessenen Differenzdruck vor.

**Ansprüche**

1. Mechanisch-elektrischer Wandler (1) zur Messung eines Differenzdrucks mit durch eine bewegbare Wand abgeschlossenen Kammern (5,6) und mit einer induktiven Einrichtung (11,12,13,14,21), die einen mit der Wand bewegbaren Kern (21) und eine in ihrer Lage zum Kern (21) einstellbare Spulenanordnung (13,14) umfaßt, dadurch gekennzeichnet, daß Kern (21) und Spulenanordnung (13,14) eine Differentialdrossel mit zumindest zwei gegeneinander verstellbaren Spulen (13,14) bilden und daß die Lage jeder Spule (13,14) zum Kern (21) einstellbar ist.

2. Wandler nach Anspruch 1, dadurch gekennzeichnet, daß die bewegbare Wand als zwischen zwei Kammern (5,6) angeordnete, beidseitig ferromagnetische, den Kern (21) der induktiven Einrichtung (11,12,13,14,21) bildende Bereiche (Scheiben 11,12,) aufweisende Membran (4) ausgebildet ist, und daß mit Abstand zu den ferromagnetischen Bereichen (Scheiben 11,12) zu beiden Seiten der Membran (4) jeweils eine Spule (13,14) angeordnet ist.

3. Wandler nach einem oder mehreren der vorhergehenden Ansprüche, dadurch gekennzeichnet, daß die Kammern (5,6) von im wesentlichen zylindrischen Ausnehmungen (7,8) in jeweils einer Gehäusehälfte (Flansch 2,3) des Wandlers (1) gebildet werden, daß die Membran (4) zwischen den Gehäusehälften (Flansch 2,3) eingespannt ist, und daß die Spulen (13,14) in der Längsachse des Wandlers (1) nahe den gehäuseseitigen Stirnflächen der Kammern (5,6) angeordnet sind.

4. Wandler nach Anspruch 3, dadurch gekennzeichnet, daß die Spulen (13,14) verstellbar jeweils am Ende einer durch eine Trennwand (15,16) von der Kammer (5,6) druckmitteldicht getrennten Axialbohrung angeordnet sind.

5. Wandler nach einem oder mehreren der vorhergehenden Ansprüche, dadurch gekennzeichnet, daß als Stelleinrichtung zur Verstellung der Spule (13,14) eine von außerhalb des Gehäuses zugängliche Gewindeeinrichtung vorgesehen ist.

6. Wandler nach Anspruch 5, dadurch gekennzeichnet, daß die Gewindeeinrichtung eine einerseits von der äußeren Gehäusestirnfläche und andererseits von der Trennwand begrenzte Gewindebohrung (17,18) aufweist.

7. Verfahren zur Justierung eines mechanisch-elektrischen Wandlers zur Messung eines Differenzdrucks insbesondere nach Anspruch 1, bei dem beide Kammern gleichem Druck ausgesetzt werden und durch Einstellung einer Spulenanordnung das Wandlerausgangssignal auf Null eingestellt wird, dadurch gekennzeichnet, daß die Einstellung des Wandlerausgangssignals auf Null durch Verstellen der Position zumindest einer Spule vorgenommen wird, und daß zum Einstellen eines vorgegebenen Kennwertes einander zugeordnete, voneinander unabhängig verstellbare Spulen um gleiche Wege in entgegengesetzten Richtungen verstellt werden.

8. Verfahren nach Anspruch 7, dadurch gekennzeichnet, daß zumindest eine von zwei Spulen (13,14) orthogonal zur Membranoberfläche verstellt wird und daß anschließend zur Einstellung eines vorgegebenen Kennwertes beide Spulen (13,14) orthogonal zur Membranoberfläche um gleiche Wege in entgegengesetzten Richtungen verstellt werden.

Fig. 1

Fig. 2